# EUROPEAN PATENT APPLICATION

(11) **EP 4 703 411 A1**
(43) Date of publication of application: **04.03.2026**
(21) Application number: 25177809.8
(22) Date of filing: 20.05.2025
(51) Int. Cl.: C08J 5/18, A41G 1/00, B44C 5/06, C08J 3/22, C08J 7/06

(54) **ARTIFICIAL LEAF AND MANUFACTURING METHOD THEREFOR**

(30) Priority: 28.08.2024 CN 202411195633
(71) Applicant: Polygroup Plastic Products (Guangxi) Company Limited, Guigang City, Guangxi 537300 (CN)
(72) Inventor: LEE, Ee Teak, ChangPing, 523000 (CN); CHOW, Lam Tim Simon, ChangPing, 523000 (CN); LIN, Heng, ChangPing, 523000 (CN)
(74) Representative: Finnegan Europe LLP

(57) **Abstract**

The present disclosure relates to an artificial leaf and a manufacturing method therefor. The manufacturing method for an artificial leaf includes the following two steps: preparing a biaxially oriented polyester film with a desired color; and cutting the biaxially oriented polyester film into a shape of leaf. The manufacturing method for an artificial leaf provided in present disclosure can improve the production efficiency of the artificial leaf, and enhance the simulation degree and durability of the artificial leaf, and the artificial leaf made by this method are more environmentally friendly and safe.

## Description

### TECHNICAL FIELD

The present disclosure relates to the technical field of artificial plant, and in particular, to an artificial leaf and a manufacturing method therefor.

### BACKGROUND

Artificial plants belong to artificial ornamental arts. Artificial plants, such as artificial trees and artificial flowers, are popular with people as they have advantages of not being limited by sunlight natural condition and not needing for care. Traditional artificial leaves, which have characteristics of tough, soft, and waterproof, etc., are made of a material of polyvinyl chloride (PVC). However, the production of PVC material requires the use of raw materials such as chlorine and ethylene, which has poor environmental protection and may release harmful substances over time. Moreover, a desired color of artificial leaves made of PVC can be presented only by paint spraying, in which, on the one hand, the cost is relatively high, on the other hand, the simulation degree is insufficient.

### SUMMARY

Based on this, it is necessary to provide an artificial leaf and a manufacturing method therefor, to improve the simulation degree of the artificial leaf, and be more environmentally friendly and safer for human body.

In one aspect, the present disclosure provides a manufacturing method for an artificial leaf, including the following steps: preparing a biaxially oriented polyester film with a desired color; and cutting the biaxially oriented polyester film into a shape of leaf.

In one embodiment, after preparing the biaxially oriented polyester film with the desired color, the manufacturing method further includes: embossing the biaxially oriented polyester film to form an uneven embossing on a surface of the biaxially oriented polyester film.

In one embodiment, preparing the biaxially oriented polyester film includes: preparing a raw material of polyethylene terephthalate particles; incorporating a color masterbatch into the raw material of polyethylene terephthalate particles; and preparing the biaxially oriented polyester film from the raw material of polyethylene terephthalate particles incorporated with the color masterbatch; wherein the biaxially oriented polyester film presents the desired color.

In one embodiment, preparing the biaxially oriented polyester film includes: preparing a raw material of polyethylene terephthalate particles; incorporating a color masterbatch into the raw material of polyethylene terephthalate particles; preparing the biaxially oriented polyester film from the raw material of polyethylene terephthalate particles incorporated with the color masterbatch; and coloring the biaxially oriented polyester film by printing using a water-based ink, such that a surface of the biaxially oriented polyester film presents the desired color.

In one embodiment, preparing the biaxially oriented polyester film with the desired color includes: preparing a raw material of polyethylene terephthalate particles; obtaining the biaxially oriented polyester film from the raw material of polyethylene terephthalate particles; and coloring the biaxially oriented polyester film by printing using a water-based ink, such that a surface of the biaxially oriented polyester film presents the desired color.

In one embodiment, the water-based ink includes a color water-based ink, a matte water-based ink, or a combination thereof.

In one embodiment, the water-based ink is printed by a laser etched roller.

In one embodiment, preparing a raw material of polyethylene terephthalate particles includes: crushing a recycled plastic product of polyethylene terephthalate material to obtain the raw material of polyethylene terephthalate particles.

In one embodiment, the water-based ink includes polytetrafluoroethylene.

In one embodiment, the water-based ink includes a vegetable oil.

In another aspect, the present disclosure further provides an artificial leaf, manufactured from a biaxially oriented polyester film with a desired color.

In one embodiment, a crossed stripe is formed on a surface of the artificial leaf.

According to the manufacturing method for an artificial leaf provided in the present disclosure, by cutting the prepared BOPET film with the desired color into the shape of leaf, leaves with various desired colors can be simulated efficiently, and the simulation degree of the artificial leaf can be ensured. Since the BOPET used in this method is more environmentally friendly than the materials used in traditional artificial leaves, and will not release harmful substances during subsequent use, therefore, the artificial leaves manufactured by this method are also more environmentally friendly and safer.

### BRIEF DESCRIPTION OF THE DRAWINGS

FIG. 1 shows a schematic flow diagram of a manufacturing method for an artificial leaf according to some embodiments of the present disclosure;
FIG. 2 shows a schematic flow diagram of a manufacturing method for an artificial leaf according to further embodiments of the present disclosure;
FIG. 3 shows a schematic flow diagram of the preparation of a biaxially oriented polyester film (BOPET) with desired color in a manufacturing method for an artificial leaf according to an embodiment of the present disclosure;
FIG. 4 shows a schematic flow diagram of the preparation of a biaxially oriented polyester film (BOPET) with desired color in a manufacturing method for an artificial leaf according to another embodiment of the present disclosure; and
FIG. 5 shows a schematic flow diagram of the preparation of a biaxially oriented polyester film (BOPET) with desired color in a manufacturing method for an artificial leaf according to yet another embodiment of the present disclosure.

### DETAILED DESCRIPTION OF THE EMBODIMENTS

In order to facilitate the understanding of the present disclosure, the present disclosure will be described more fully hereinafter with reference to the related accompanying drawings. Various embodiments of the present disclosure are presented in the accompanying drawings. However, the present disclosure may be embodied in many different forms and is not limited to the embodiments described herein. Rather, these embodiments are provided, so that the understanding of the present disclosure will be more thorough and complete.

All technical and scientific terms used herein have the same meaning as commonly understood by one of ordinary skill in the art to which the present disclosure applies, unless otherwise defined. The terms used in the specification of the present disclosure herein are for the purpose of describing specific embodiments only and are not intended to limit the present disclosure.

In order to make the technical solutions and advantages of the present disclosure more clearly, the present disclosure will be further described in detail below with reference to the accompanying drawings and embodiments. It should be understood that the specific embodiments described herein are only used to explain the present disclosure and not intended to limit the present disclosure.

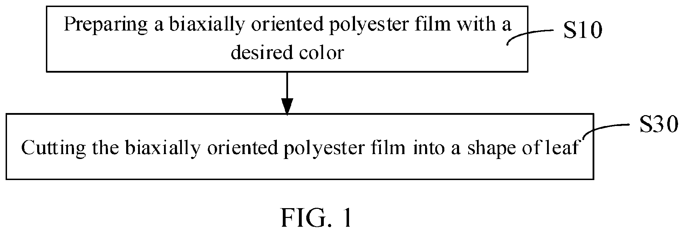

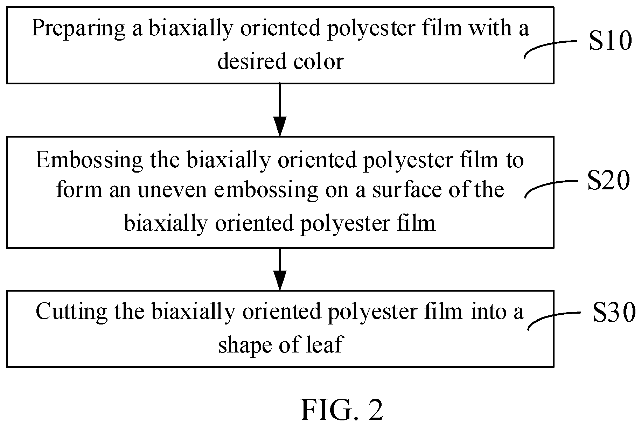

FIG. 1 and FIG. 2 show a schematic flow diagram of a manufacturing method for an artificial leaf according to embodiments of the present disclosure. As shown in FIG. 2, in some embodiments, the manufacturing method for artificial leaf includes:

S10, preparing a biaxially oriented biaxially oriented polyester film (also known as BOPET) with a desired color. BOPET is a high-quality film made from a polyester resin, which can also have gloss itself and can present a similar effect to the reflection phenomenon of real leaves when exposed to light. The color of BOPET matches the color of the leaf needed to be simulated, for example, it can be green, red, withered yellow, etc.

S20, embossing the biaxially oriented polyester film to form an uneven embossing on a surface of the biaxially oriented polyester film with the desired color. Wherein a crossed stripe can be formed on the surface of the biaxially oriented polyester film with the desired color by an embossing roller.

S30, cutting the biaxially oriented polyester film into a shape of leaf to obtain an artificial leaf made from BOPET.

According to the manufacturing method for an artificial leaf provided in embodiments, by cutting the prepared BOPET film with the desired color into the shape of leaf, leaves with various desired colors can be simulated efficiently, and the simulation degree of the artificial leaf can be ensured. Since the BOPET used in this method is more environmentally friendly than the materials used in traditional artificial leaves, and will not release harmful substances during subsequent use, therefore, the artificial leaves manufactured by this method are also more environmentally friendly and safer.

Furthermore, in this embodiment, by printing and embossing the surface of the BOPET with the desired color, the overall glossiness of the surface of BOPET can be appropriately reduced, that is, the overall glossiness of the surface of the manufactured artificial leaf can be changed, so that the manufactured artificial leaf is closer to real leaf in terms of impression. In this way, the simulation degree of an artificial tree can be effectively improved by pasting artificial leaves with different glossiness on the trunk of the artificial tree according to the growth rhythm of plants.

Referring to FIG. 1, in other embodiments, step S20, embossing the biaxially oriented polyester film with the desired color to form an uneven embossing on a surface thereof, may not be included. That is, in this embodiment, it is not necessary to form an embossing on the surface of the artificial leaf to change the overall glossiness of the artificial leaf, and the present disclosure has no limitation to this.

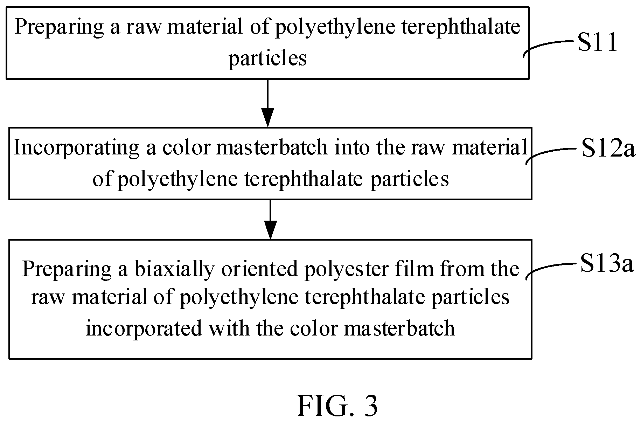

Referring to FIG. 3, in an embodiment, step S10, preparing a biaxially oriented biaxially oriented polyester film with a desired color, includes the following steps.

S11, preparing a raw material of polyethylene terephthalate (i.e., PET) particles.

In step S11, PET plastic products (such as plastic water bottles) can be recycled, to obtain a raw material of PET particles. Specifically, after recycling the used PET plastic water bottles, the PET plastic water bottles are crushed into a raw material of PET particles using a crusher. PET plastic water bottles are widely used and come from a wide range of sources, and the PET used for the body of bottle has high purity, reducing costs of purification and making them more environmentally friendly. In an alternative embodiment, a raw material of PET particles can also be directly purchased, and the present disclosure has no limitation to this.

S12a, incorporating a color masterbatch into the raw material of PET particles.

Color masterbatch is a kind of coloring agent specifically used for polymer materials, which is composed of pigments, carriers, additives, and other components, and is an aggregate made by attaching and loading a pigment exceeding a constant amount to a resin. During processing, a resin or product with a desired color may be produced by mixing a small amount of color masterbatch with uncolored plastic particles.

There are various types of color masterbatch, which can be specifically divided into ordinary color masterbatch, flame-retardant color masterbatch, matte color masterbatch, matte flame-retardant color masterbatch, etc.

By incorporating an ordinary color masterbatch into the raw material of PET particles, BOPET with the color of the ordinary color masterbatch, such as green, yellow, brown, white, etc., can be produced, and the surface of BOPET has a glossy effect and high glossiness.

Flame-retardant color masterbatch can be used in the production of BOPET with flame retardant effect, and the BOPET can present the color such as green, yellow, brown, white, etc. of the flame-retardant color masterbatch, the surface of the BOPET also has a glossy effect and a high glossiness.

Matte color masterbatch can be used in the production of BOPET, which has the color of the matte color masterbatch, such as green, yellow, brown, white, etc. However, the surface of the BOPET has a matte effect and a low glossiness.

Matte flame-retardant masterbatch can be used in the production of BOPET with flame-retardant effect, and the BOPET can present the color of the matte flame-retardant color masterbatch, such as green, yellow, brown, white, etc. The surface of the BOPET has a matte effect and a low glossiness.

The matte flame-retardant masterbatch is added with halogen-free flame retardants, thus can provide flame-retardant effect. Halogen-free flame retardants are mostly hydrates of metal oxides, such as aluminum hydroxide, magnesium hydroxide, etc., or phosphate ester flame retardants. Halogen-free flame retardants have the advantages of, such as, low smoke, and non-toxicity, and are harmless to human body. S13a, preparing BOPET from the raw material of PET particles incorporated with the color masterbatch. Wherein, the color presented on the BOPET is the predetermined color.

Specifically, the raw material of PET particles incorporated with a color masterbatch (such as green masterbatch) can be melted to prepare a polyester resin block, which then can be made into BOPET after processes, such as, drying, melting, extruding, sheet-casting, and lateral-axial stretching. The color masterbatch incorporated into the PET particles may be a color masterbatch with any colors, such that the BOPET to be prepared can present a desired color (such as green, purple, yellow, etc.). wherein, the BOPET present s a color corresponding to the color masterbatch, such as green, purple, yellow, etc.

In this embodiment, the BOPET with the desired color is directly prepared by adding the color masterbatch into the raw material of PET particles, which can be cut without additional coloring, and then the artificial leaf of with the desired color are obtained. Therefore, the production cost can be greatly reduced and the production efficiency can be improved. In addition, the artificial leaf manufactured in this way presents the desired color, such as green, by itself, without worrying about fading, and have higher durability.

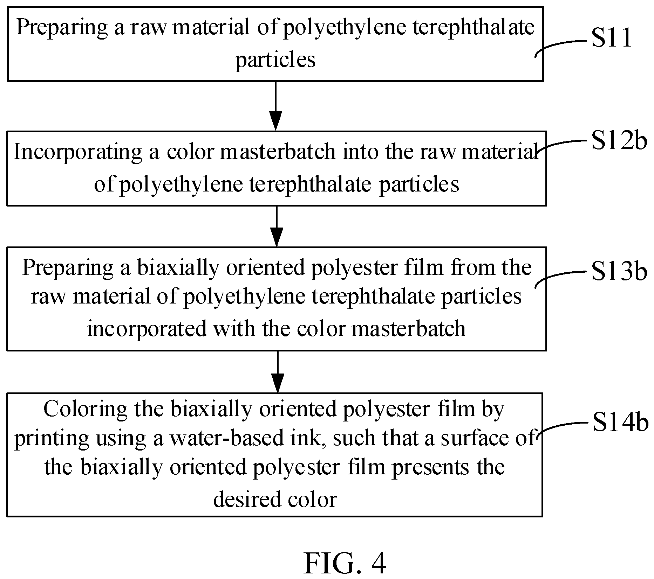

Referring to FIG. 4, in another embodiment, S10, preparing a biaxially oriented biaxially oriented polyester film with a desired color includes, the following steps.

S11, preparing a raw material of PET particles;
S12b, incorporating a color masterbatch into the raw material of PET particles;
S13b, preparing a BOPET with corresponding color by the raw material of PET particles incorporated with the color masterbatch; and
S14b, coloring the BOPET by printing using a water-based ink, such that a surface of the BOPET presents the desired color.

Among them, the steps S11, S12b, and S13b in this embodiment may correspond to steps S11, S12a, and S13a in the above embodiments, and will not be described here again.

In this embodiment, the BOPET with corresponding color prepared in S13a can be colored by printed with a high-speed printer using a water-based ink. Compared with spraying and other methods, coloring by printing is more environmentally friendly and less prone to fading. Meanwhile, coloring by printing also has the advantages of fast speed and high efficiency. Specifically, a high-speed printer can print for coloring using a laser etched roller. Wherein, the laser etched roller is used for performing an engraving by laser with higher processing accuracy, and the shapes of the processing grooves formed by laser engraving are U-shaped honeycomb grooves, which can reduce the depth of ink required when printing on the surface of BOPET. Compared with the traditional printing method using an electric engraving roller, coloring BOPET by printing using a laser etched roller can save the amount of water-based ink and reduce costs.

In step S14b, coloring the BOPET by printing includes changing the color of the surface of the BOPET by printing, and also includes changing the surface glossiness of the BOPET by printing. wherein, the BOPET can be colored by printing as a whole, or can be colored by printing partially. For example, in the process for producing an artificial tree, it may be necessary to produce more leaves in a first color (for example, green) and at the same time, a smaller number of leaves in a second color (for example, brown) . In this case, after producing the green BOPET, it can be further colored by printing using a high-speed printer, making a part of the green BOPET presents brown. Specifically, when more brown artificial leaves are needed, the printing area can be increased, thereby increasing the area of the brown BOPET. When fewer brown artificial leaves are required, the printing area can be reduced, thereby reducing the area of the brown BOPET. Therefore, the number of artificial leaves in a specific color produced can be controlled by controlling the printing area. For example, in some cases, a production line can only produce BOPET with a specific color. If the color of the produced BOPET needs to be changed, it will spend a relatively high cost. At this time, the BOPET with a specific color can be colored by printing to make the surface thereof presents a desired color, thus can reduce production costs.

Wherein, the water-based ink uses water as a diluent without the need to use a volatile organic solvent. The organic solvent in conventional ink is prone to volatilize, which not only pollutes the environment but also poses a threat to human health. Compared to conventional ink, the water-based ink used in this embodiment is more environmentally friendly. Furthermore, the water-based ink contains a vegetable oil, which, as a kind of resin cosolvent, helps to reduce harmful substances in inks and reduces potential harm to the environment and the human body. Moreover, in the water-based ink, the vegetable oil can improve the fluidity, adhesion, and drying performance of the ink, which can improve the printing quality and color saturation of the water-based ink. In addition, adding vegetable oil into the water-based ink can also adjust the drying speed of the ink by adjusting the proportion of vegetable oil. In this embodiment, vegetable oil, such as soybean oil, is added into the water-based ink, and soybean oil is used to replace mineral oil in traditional water-based ink, further enhancing the environmental protection of this method.

Furthermore, the water-based ink contains polytetrafluoroethylene (i.e., PTFE). Specifically, PTFE exists in a form of micro powder in the water-based ink, which can significantly improve the friction resistance of the water-based ink and make artificial leaf more wear-resistant. On the other hand, the combustion point of PTFE can be improved by changing the performance of water-based ink, thus the probability of the PTFE being ignited in flames can be reduced. Adding PTFE micro powder into the water-based ink can also improve the flame retardant of the water-based ink, such that the artificial leaf is not easy to burn and reduce the safety risks of the artificial leaf. In this embodiment, the weight ratio of the PTFE micro powder in the water-based ink is 0.1% to 3%.

In this embodiment, the water-based ink includes non-transparent colored (e.g., purple, yellow, white, etc.) water-based ink and/or transparent matte water-based ink. That is, the water-based ink used for coloring by printing includes a non-transparent colored water-based ink, a transparent matte water-based ink, or a combination thereof.

For example, a colored water-based ink can be printed on the BOPET with corresponding color to change the color presented on the surface of the BOPET, thereby obtaining the BOPET with the desired color. Wherein, the concentration of pigment in the water-based ink can be adjusted to actual needs. In actual production process, when there is a need to manufacture an artificial leaf with brighter color and higher color saturation, the concentration of pigment in the water-based ink can be increased, to increase the brightness and saturation of the color on the surface of BOPET. By changing the concentration of pigment in water-based ink, artificial leaves with different brightness and color saturation can be manufactured, to simulate leaves of different types and in different growth stages. Furthermore, these artificial leaves can be fixed onto the trunk of the artificial tree according to the growth rhythm of the tree, which can further improve the simulation degree of the artificial trees.

For example, a transparent matte water-based ink can also be printed on the BOPET with corresponding color. Wherein, matte water-based ink includes full-matte ink and semi-matte ink. The matte degree of full-matte ink is, for example, 5 GU to 15 GU, and the matte degree of semi-matte ink is, for example, 15 GU to 30 GU. Matte water-based ink can produce a dull or weak gloss effect, so that the glossiness of the surface of BOPET with corresponding color changes, thereby obtaining the BOPET with the desired color. Printing transparent matte water-based ink can make the color of the BOPET closer to real leaf, improving the simulation degree of artificial leaf manufactured by this method.

For example, BOPET with corresponding color can also be printed using a colored water-based ink and a transparent matte water-based ink, to obtain the BOPET with the desired color.

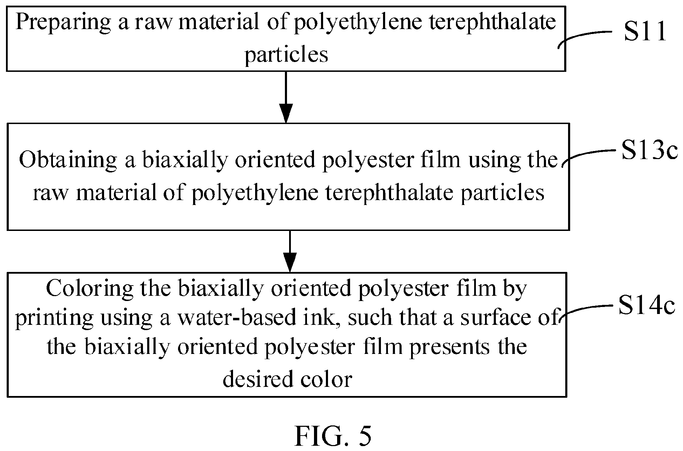

In another embodiment, referring to FIG. 5, step S10, preparing a BOPET with a desired color, includes the following steps.

S11, preparing a raw material of PET particles;
S13c, obtaining the BOPET using the raw material of PET particles; and
S14c, coloring the BOPET by printing using a water-based ink, such that a surface of the BOPET presents the desired color.

The step S11 in this embodiment can refer to the step S11 in the above embodiments and will not be described here again.

In this embodiment, there is no need to add a color masterbatch into the raw material of PET particles. A BOPET with the same color as PET raw material can be prepared using the raw material of PET particles, for example, colorless and transparent BOPET. Then, the BOPET with a desired color can be prepared by implementing the step S14c.

Wherein, the step S14c in this embodiment is basically the same as the step S14b in the above embodiments. In this embodiment, the water-based ink for printing includes non-transparent colored (e.g., purple, yellow, white, etc.) water-based ink and/or transparent matte water-based ink, which can change both the color presented on the surface of BOPET and the glossiness of the surface of BOPET. The water-based ink described in step S14c can refer to the water-based ink in the above embodiments and will not be described here again.

Return to FIG. 2, in some embodiments, in step S20, the surface of the BOPET can be subjected to a pressure by using tools such as concave-convex molds and embossing rollers, to produce plastic deformation on the surface of the BOPET, which in turn produces textures or patterns on the surface of the BOPET. These textures and patterns also change the way light is reflected and scattered. Specifically, the uneven surface structure formed by embossing will cause diffuse reflection of light on the surface of the BOPET film, reducing the proportion of specular reflection and thus lowering glossiness. Therefore, patterns of different depths and different sizes can be embossed according to needs, and then artificial leaves with different glossiness and different sizes can be obtained, to simulate leaves at different growth stages, so as to further enhance their simulation degree, which in turn improve the impression of artificial trees. In this embodiment, the texture or pattern on the surface of the BOPET is, for example, dense crossed stripes, which can reduce the glossiness of the BOPET to a level close to that of real leaf, thereby avoiding excessive reflection that affects simulation degree.

In conjunction with FIG. 1 and FIG. 2, in some embodiments, in step S30, the BOPET can be cut into a shape of leaf using an automatic cutting machine, which can improve productivity. In another embodiment, the BOPET can be manually cut by tools such as a scissor. The artificial leaf made by cutting BOPET into the shape of leaf is soft in texture, has high tensile strength, and is not easily damaged. Optionally, the artificial leaf is, for example, oval, heart-shaped, needle-shaped, palm-shaped, etc. In this embodiment, the BOPET is cut into needle-shaped leaves.

On the other hand, since the raw material of PET particles are refined and polymerized from petroleum, the raw material of PET particles contain antimony. Although antimony compounds have flame retardant effects, antimony is toxic and can damage human organs and even induce cancer. In the present disclosure, titanium is used to replace antimony in the raw material of PET particles used for manufacturing BOPET. Titanium has low harm to the human body, so the artificial leaf manufactured are safer.

The above manufacturing method for an artificial leaf involves preparing a BOPET with a desired color, and then manufacturing an artificial leaf by using the BOPET. On the one hand, the artificial leaf made of BOPET have better tensile and impact resistance, as well as higher durability; On the other hand, the surface of BOPET can be directly printed with ink, which is a characteristic that traditional PVC artificial leaf do not possess. Compared with dyeing or paint spraying, coloring by printing has higher coloring stability and uniformity, reduces production costs, and has higher production efficiency, further reducing production costs. In addition, compared to other plastic films, the maximum thickness that can be produced of BOPET is relatively large, such as, it can be greater than 100 µm. Such that, the artificial leaf made of BOPET are closer to the morphology of real leaf.

It should be understood that although the various steps in the flowcharts involved in the above embodiments are shown in the order indicated by the arrows, these steps are not necessarily executed in the order indicated by the arrows. Unless otherwise specified herein, there is no strict order limit for the execution of these steps, and they can be executed in other orders. Moreover, at least part of the steps in the flowcharts involved in the above embodiments may include multiple steps or stages, which are not necessarily completed at the same time, but can be executed at different times. The order of execution of these steps or stages is not necessarily sequential, but can be performed alternately or interchangeably with other steps or at least part of the steps or stages in other steps.

The present disclosure also provides an artificial leaf manufactured from a BOPET with a desired color. The artificial leaf in this embodiment can be manufactured by the manufacturing method summarized provided in the above-mentioned embodiments. The artificial leaf provided by this embodiment has an advantage of not being easily broken, and the artificial leaf can also be manufactured by printing using a water-based ink, and has an advantage of high simulation degree.

The artificial leaf has a multi-layer BOPET structure, such as a double-layer BOPET structure, with each layer of BOPET having a thickness greater than 65 µm, so that the artificial leaf will not bend and deform downward under the action of gravity.

In some embodiments, there are crossed stripes formed on the surface of the artificial leaf. Specifically, in this embodiment, crossed stripes are formed on the surface of the artificial leaf by embossing using an embossing roller, which can appropriately reduce the glossiness of the BOPET, making it closer to real leaf in terms of impression. The simulation degree of an artificial tree can be effectively improved by pasting artificial leaves with different glossiness on the trunk of the artificial tree according to the growth rhythm of plants

Each of the technical features of the above-mentioned embodiments may be combined arbitrarily. To simplify the description, not all the possible combinations of each of the technical features in the above embodiments are described. However, all of the combinations of these technical features should be considered within the scope of this disclosure, as long as such combinations do not contradict each other.

The above-mentioned embodiments are merely illustrative of several embodiments of the present disclosure, which are described specifically and in detail, but it cannot be understood to limit the scope of the present disclosure. It should be noted that, for those ordinary skilled in the art, several variations and improvements may be made without departing from the concept of the present disclosure, and all of which are within the protection scope of the present disclosure. Therefore, the protection scope of the present disclosure shall be defined by the appended claims.

## Claims

1. A manufacturing method for an artificial leaf, comprising the following steps:
preparing a biaxially oriented polyester film with a desired color; and
cutting the biaxially oriented polyester film into a shape of leaf.

2. The manufacturing method for an artificial leaf of claim 1, wherein after preparing the biaxially oriented polyester film with the desired color, it further comprises:
embossing the biaxially oriented polyester film to form an uneven embossing on a surface of the biaxially oriented polyester film.

3. The manufacturing method for an artificial leaf of claim 1, wherein preparing the biaxially oriented polyester film comprises:
preparing a raw material of polyethylene terephthalate particles;
incorporating a color masterbatch into the raw material of polyethylene terephthalate particles; and
preparing the biaxially oriented polyester film from the raw material of polyethylene terephthalate particles incorporated with the color masterbatch; wherein the biaxially oriented polyester film presents the desired color.

4. The manufacturing method for an artificial leaf of claim 1, wherein preparing the biaxially oriented polyester film comprises:
preparing a raw material of polyethylene terephthalate particles;
incorporating a color masterbatch into the raw material of polyethylene terephthalate particles;
preparing the biaxially oriented polyester film from the raw material of polyethylene terephthalate particles incorporated with the color masterbatch; and
coloring the biaxially oriented polyester film by printing using a water-based ink, such that a surface of the biaxially oriented polyester film presents the desired color.

5. The manufacturing method for an artificial leaf of claim 1, wherein preparing the biaxially oriented polyester film with the desired color comprises:
preparing a raw material of polyethylene terephthalate particles;
obtaining the biaxially oriented polyester film from the raw material of polyethylene terephthalate particles; and
coloring the biaxially oriented polyester film by printing using a water-based ink, such that a surface of the biaxially oriented polyester film presents the desired color.

6. The manufacturing method for an artificial leaf of claim 4 or 5, wherein the water-based ink comprises a color water-based ink, a matte water-based ink, or a combination thereof.

7. The manufacturing method for an artificial leaf of claim 4 or 5, wherein the water-based ink is printed by a laser etched roller.

8. The manufacturing method for an artificial leaf of any one of claims 3 to 5, wherein preparing a raw material of polyethylene terephthalate particles comprises:
crushing a recycled plastic product of polyethylene terephthalate material to obtain the raw material of polyethylene terephthalate particles.

9. The manufacturing method for an artificial leaf of claim 4 or 5, wherein the water-based ink comprises polytetrafluoroethylene.

10. The manufacturing method for an artificial leaf of claim 4 or 5, wherein the water-based ink comprises a vegetable oil.

11. An artificial leaf, manufactured from a biaxially oriented polyester film with a desired color.

12. The artificial leaf of claim 11, wherein a crossed stripe is formed on a surface of the artificial leaf.
